# EUROPÄISCHE PATENTSCHRIFT

(11) **EP 1 981 727 B1**
(45) Veröffentlichungstag und Bekanntmachung des Hinweises auf die Patenterteilung: **13.10.2010**
(21) Anmeldenummer: 07702410.7
(22) Anmeldetag: 29.01.2007
(51) Int. Cl.: B60J 7/22

(54) **WINDABWEISER IM KRAFTFAHRZEUGBEREICH**
WIND DEFLECTOR IN THE FIELD OF MOTOR VEHICLES
DÉFLECTEUR D'AIR DANS LE DOMAINE VÉHICULE À MOTEUR

(30) Priorität: 08.02.2006 DE 102006005815
(43) Veröffentlichungstag der Anmeldung: 22.10.2008
(73) Patentinhaber: Webasto AG, 82131 Stockdorf (DE)
(72) Erfinder: HAHN, Roland, 82110 Germering (DE); HÖLZEL, Dominik, 82194 Gröbenzell (DE)
(74) Vertreter: Epping - Hermann - Fischer
(86) Internationale Anmeldenummer: PCT/DE2007/000179
(87) Internationale Veröffentlichungsnummer: WO 2007/090371

(56) Entgegenhaltungen:
- EP-A- 1 342 600
- FR-A1- 2 845 038
- US-B1- 6 666 503

## Beschreibung

Die vorliegende Erfindung bezieht sich auf einen Windabweiser im Kraftfahrzeugbereich, gemäß dem Oberbegriff von Anspruch 1.

Obwohl auf beliebige Bereiche eines Kraftfahrzeuges anwendbar, werden die vorliegende Erfindung sowie die ihr zugrunde liegende Problematik in Bezug auf ein Schiebedach eines Kraftfahrzeuges näher erläutert. Der vorliegende Erfindungsgedanke ist beispielsweise auch auf Fenster, Sonnendächer oder Panoramadächer eines Fahrzeuges anwendbar.

Ein allgemein bekanntes Problem bei einem KraftfahrzeugSchiebedach besteht darin, dass es bei geöffnetem Deckel zu periodischen Druckschwankungen im Inneren des Fahrzeuges kommen kann, wenn sich das Fahrzeug mit niedrigen bis mittleren Geschwindigkeiten bewegt. Diese periodischen Druckschwankungen machen sich in unerwünschter Weise als so genanntes Wummern, hauptsächlich akustisch, bemerkbar. Zur Vermeidung dieser Druckschwankungen werden im Allgemeinen Windabweiser verwendet.

Ein Windabweiser hat generell die Funktion, die Strömungsverhältnisse des Kraftfahrzeugs zu verbessern, wenn sich beispielsweise der Deckel eines Schiebedachs in einer geöffneten Stellung befindet. Der Windabweiser ist üblicherweise an dem in Fahrtrichtung gesehen vorderen Ende der vom Schiebedeckel freigegebenen Dachöffnung angeordnet und wird aus einer eingefahrenen Stellung, in der er sich unterhalb der Außenfläche des Fahrzeugdaches befindet, in eine ausgestellte Stellung überführt, wenn der Schiebedeckel geöffnet wird.

Herkömmliche Windabweiser besitzen ein Anbindungselement, welches in einer Wölbung eines dem Windabweiser zugeordneten Blechrahmens im Dach des Fahrzeuges angeordnet ist. Die Wölbung ist nach unten in Richtung des Fahrgastinnenraums in dem Blechrahmen ausgebildet und nimmt zusätzlich zu dem Anbindungselement bei geschlossenem Schiebedeckel ein Windabweisernetz auf.

Eine erste Problematik ergibt sich bei der oben beschriebenen Ausführungsform daraus, dass die Wölbung im Dachrahmen den Fahrgastinnenraum im Bereich des Dachhimmels verkleinert und daher den Komfort des Fahrzeugs nachteilig beeinflusst.

Ferner weisen solche Windabweiser ein über dem Anbindungselement angeordnetes Ausstellelement auf, wobei das Windabweisernetz zwischen dem Ausstellelement und dem Anbindungselement aufspannbar befestigt ist. In der ausgestellten Stellung des Ausstellelementes liegt ein Abschnitt des Windabweisernetzes straff an einem vorderen Dachrand der Dachöffnung an. Diese hat den Zweck, dass ein Einströmen von Fahrtwind in den Blechrahmen unterhalb des Dachrands verhindert wird und somit eine Reduzierung von Fahrtwindgeräuschen erzielt werden kann.

Des Weiteren weist der Windabweiser in der ausgestellten Stellung eine Ausstellhöhe auf, die den Abstand zwischen einer Dachoberseite des Daches und einer Oberkante des Ausstellelements angibt. Weicht diese Ausstellhöhe um nur wenige Zehntelmillimeter von einer Soll-Ausstellhöhe ab, verschlechtert der Windabweiser seine geräuschreduzierende Wirkung.

Hinzu kommt, dass Dächer von Fahrzeugen vermehrt Glaselemente bzw. Glasfestelemente aufweisen, welche vor und hinter dem Schiebedeckel des Schiebedachs angeordnet sind. Diese haben den Zweck, das Raumgefühl für Fahrzeuginsassen zu verbessern. Solche Glaselemente werden typischerweise im Dach des Fahrzeuges eingeklebt. Beim Einkleben der Glaselemente kommt es, beispielsweise auf Grund eines ungleichmäßigen Auftragens des Klebstoffs zu Abweichungen bzgl. der genauen Lage der Glaselemente (Verklebetoleranz).

Ferner sind solche Glaselemente leicht unterschiedlich gewölbt (Glaswölbetoleranz), was sich aus ihrem Herstellungsprozess ergibt. Bilden solche Glaselemente den vorderen Dachöffnungsrand aus, so unterliegt dieser sowohl der Glaswölbetoleranz als auch der Verklebetoleranz des Glaselements. In Summe können diese Toleranzen im Bereich mehrerer Millimeter liegen.

Hieraus ergibt sich eine zweite Problematik die darin besteht, dass die Ausstellhöhe des Ausstellelementes und damit die Geräuschreduktion durch die Position des Dachrands beeinflusst wird. Ferner kann es zu einer Faltenbildung in dem Abweisernetz und damit zu einer nachteiligen Geräuschentwicklung kommen, wenn der Dachrand im Bereich seiner Anlage an dem Abweisernetz schräg zu dem Abweisernetz angeordnet ist. Folglich wirken sich die Verklebetoleranz und die Glaswölbetoleranz direkt auf die Funktion des Windabweisers aus.

Die US 6,666,503 Bl offenbart einen Windabweiser für eine Dachöffnung in einem Fahrzeugdach. Der Windabweiser weist ein unteres Rahmenelement und ein oberes Rahmenelement auf. Das untere Rahmenelement ist mit dem Fahrzeug nahe der Dachöffnung gekoppelt, und das obere Rahmenelement ist mit dem Fahrzeug nahe der Dachöffnung drehbar gekoppelt. Zwischen dem unteren Rahmenelement und dem oberen Rahmenelement ist ein Element aus einem flexiblen Material angeordnet.

Die EP 1 342 600 A2 offenbart einen Windabweiser für ein Fahrzeugdach, mit einem Basiselement zum Anbringen an dem Fahrzeugdach, einem Aussteller, der mit dem Basiselement schwenkbar verbunden ist, einem luftdurchlässigen und flexiblen Abweiserelement, das an dem Basiselement und an dem Aussteller angebracht ist, und mindestens einer Ausstellerfeder. Die Ausstellerfeder beaufschlagt den Aussteller in eine ausgestellte Stellung, in der das Abweiserelement zwischen dem Basiselement und dem Aussteller gespannt ist.

Vor diesem Hintergrund liegt der vorliegenden Erfindung die Aufgabe zugrunde, einen besseren und insbesondere einen gegenüber Bauteil- und Montagetoleranzen unempfindlicheren Windabweiser bereitzustellen.

Erfindungsgemäß wird diese Aufgabe durch einen Windabweiser mit den Merkmalen des Patentanspruchs 1 gelöst.

Demgemäß ist ein Windabweiser für einen mittels eines beweglichen Dachteils verschließbare und teilweise freigebbare Dachöffnung eines Dachs eines Fahrzeugs, das ein Glaselement aufweist, welches einen Dachrand der Dachöffnung und/oder einen Teil des Dachs bildet, mit einem Anbindungselement, welches an einem einem Fahrgastraum zugewandten Randabschnitt des Glaselements befestigbar ist, mit einem Ausstellelement, welches zu dem Glaselement ausstellbar ist, mit einem aufspannbaren Abweiserelement, welches an seinem einen Randabschnitt an dem Ausstellelement und an seinem anderen Randabschnitt an dem Anbindungselement befestigt ist, vorgesehen. Das Anbindungselement weist eine Dichtung, insbesondere eine Hohlprofildichtung auf, an welcher ein vorderer Rand des beweglichen Dachteils bei verschlossener Dachöffnung abdichtend anlegbar ist.

Somit weist die vorliegende Erfindung gegenüber den bekannten Ansätzen gemäß dem Stand der Technik den Vorteil auf, dass die Ausstellhöhe des Ausstellelementes unabhängig von der Glaswölbetoleranz und der Verklebetoleranz des Glaselements ist. Somit entfallen hochgenaue und zeit- und ressourcenaufwändige Positionierprozesse bei der Montage des Glaselements. Ferner entstehen keine Falten in dem Abweiserelement, da das Glaselement immer bündig zu dem Abweiserelement angeordnet ist. Die konstante Ausstellhöhe sowie die Eliminierung von Falten sorgen für reduzierte Fahrtwindgeräusche im Bereich des Schiebedachs. Weiterhin vorteilhaft ist, dass die Wölbung in dem Blechrahmen kleiner dimensioniert werden kann, da das Anbindungselement für das Abweiserelement nun nicht mehr unterhalb des Ausstellelementes angeordnet ist, sondern neben diesem. Damit vergrößert sich der Fahrzeuginnenraum und bietet somit Insassen mehr Platz in deren Kopfbereich. Außerdem werden bei geschlossener Stellung des beweglichen Dachteils Vibrationen zwischen diesem und dem Glaselement in der Dichtung aufgenommen. Ferner verhindert die Dichtung ein Eindringen von Wasser zwischen dem Rand des Glaselementes und dem beweglichen Dachteil bei verschlossener Dachöffnung. Hohldichtungen sind deshalb vorteilhaft zu verwenden, da sie ein hohes Maß an Formkompatibilität aufweisen. Zusätzlich oder alternativ können auch Lippendichtungen ohne Hohlprofil verwendet werden.

In den Unteransprüchen finden sich vorteilhafte Ausgestaltungen und Verbesserungen des in dem Patentanspruch 1 angegebenen Windabweisers.

Gemäß einer bevorzugten Weiterbildung ist das Anbindungselement als Umschäumung ausgebildet. Eine solche lässt sich an dem Glaselement automatisiert anbringen und kann daher zu Kosteneinsparungen sowie zu einer Verkürzung der Prozesszeit führen.

Vorzugsweise weist die Umschäumung Polyurethan auf. Polyurethan besitzt eine ausreichende Festigkeit, um eine dauerhafte Befestigung des Abweiserelements zu ermöglichen. Ferner besitzen bestimmte Polyurethane kurze Aushärtungszeiten, was zu einem verkürzten Herstellungsprozess führt.

Bei einer weiter bevorzugten Weiterbildung der Erfindung ist die Befestigung des Abweiserelements an dem Anbindungselement und/oder die Befestigung des Abweiserelements an dem Ausstellelement durch Federelemente, Klebstoff, Umspritzung des Abweiserelements, Schweißnaht und/oder Umschlingung vorgesehen. Während stoffschlüssige Verbindungen, wie Klebstoff, Umspritzung des Abweiserelements durch das Anbindungselement (also beispielsweise Umspritzen des Glaselements und des Abweiserelements mit Polyurethan in einem Schritt) und Schweißnähte weisen den Vorteil eines geringen Montageaufwands sowie einer kurzen Bearbeitungszeit pro Bauteil auf. Formschlüssige Verbindungen, beispielsweise durch Kederelemente oder durch Umschlingung einer Achse des Anbindungselementes mit dem Abweiserelement, sind leicht lösbar und erlauben deshalb ein einfaches Austauschen des Abweiserelements bei dessen Beschädigung.

Eine weitere vorteilhafte Ausgestaltung der Erfindung sieht vor, dass das Abweiserelement als Folie und/oder als Netz ausgebildet ist. Dies erlaubt eine einfache und kostengünstige Reduzierung von Windgeräuschen.

Die Erfindung wird nachfolgend anhand der in den schematischen Figuren der Zeichnung dargestellten Ausführungsbeispiele näher erläutert. Es zeigen dabei:
- Figur 1: in einer perspektivischen Ansicht ein Ausführungsbei- spiel eines erfindungsgemäßen Windabweisers;
- Figur 2: einen Schnitt A-A aus Figur 1.

In allen Figuren der Zeichnung sind gleiche bzw. funktionsgleiche Elemente - sofern nichts Anderes angegeben ist - mit jeweils denselben Bezugszeichen versehen worden.

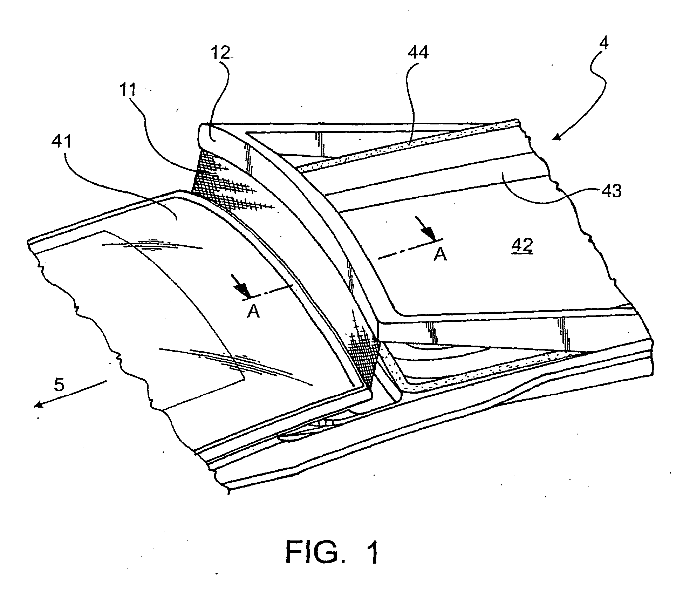

Figur 1 zeigt eine perspektivische Ansicht eines Ausführungsbeispiels eines erfindungsgemäßen Windabweisers 1. Ein Dach 4 weist eine Dachöffnung 42 bei einem entgegen der Fahrtrichtung 5 nach hinten verschobenen Schiebedachdeckel (nicht dargestellt) auf. Das Dach 4 weist in seinem vorderen Bereich ein Glaselement 41 auf. Ein bügelförmiges Ausstellelement 12 befindet sich in einer zu dem Dach ausgestellten Stellung. Ein Windabweisernetz 11 ist an dem Ausstellelement 12 und an dem Glaselement 41 befestigt. Das Ausstellelement 12 ist in einem Blechrahmen 43, welcher in dem Dach 4 des Fahrzeuges montiert ist, schwenkbar gelagert, und mittels einer Feder in eine Ausstellrichtung vorgespannt. In der ausgestellten Stellung des Ausstellelementes 12 ist das Abweisernetz 11 aufgespannt und reduziert Fahrwindgeräusche. Eine Dichtung 44 ist umlaufend an der Dachöffnung 42 zum Abdichten des Dachs bei geschlossenem Schiebedeckel vorgesehen.

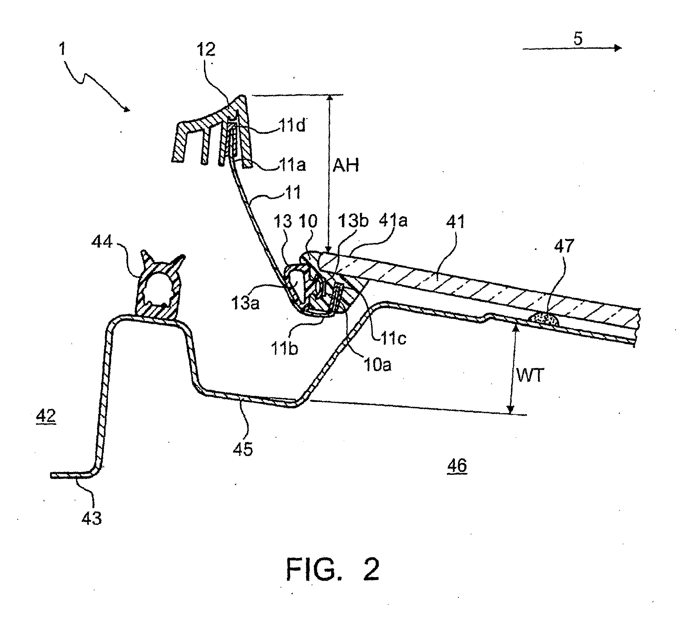

Figur 2 zeigt einen Schnitt A-A aus Figur 1. Eine Polyurethanumschäumung 10 ist unterseitig an einem vorderen Randabschnitt 41a des Glaselements 41 angebracht. Die Polyurethanumschäumung 10 besitzt eine Nut 10a, in welcher ein Eingriffselement 13b einer Hohlprofildichtung 13 mit einer längsseitigen Kammer 13a angebracht ist. Die Hohlprofildichtung 13 ist dabei derart angeordnet, dass sie bei geschlossenem Schiebedachdeckel mit diesem mechanisch und akustisch abdichtend in Kontakt ist. Das Abweisernetz 11 ist an seinem unteren Randabschnitt 11b mittels Kederelementen 11c in der Polyurethanumschäumung befestigt. An seinem anderen Randabschnitt 11a ist das Abweisernetz 11 durch Kederelemente 11d an dem Ausstellelement 12 befestigt.

Wenn sich das Ausstellelement 12 in der eingeklappten Stellung bei geschlossenem Schiebedeckel befindet, nimmt die Wölbung 45 des Blechrahmens 43 lediglich das gefaltete Windabweisernetz sowie einen Teil des Ausstellelementes und nicht das Anbindungselement 10 auf. Die Wölbungstiefe WT kann bei dieser Ausführungsform sehr klein dimensioniert werden, was zu einer Vergrößerung des Fahrzeuginnenraums 46 führt.

Das Glaselement 41 ist durch Klebstoff 47 auf den Blechrahmen 43 aufgeklebt. Es ist deutlich zu erkennen, dass die Ausstellhöhe AH des Ausstellelementes 12 unabhängig von einer Glaswölbetoleranz und/oder Verklebetoleranz in einer Richtung senkrecht zum Fahrgastraum des Glaselementes 41 ist. Ferner liegt die Polyurethanumschäumung 10 immer bündig an dem Abweisernetz 11 an, weil direkt verbunden mit dem Abweisernetz 11. Somit entstehen bei ausgestelltem Ausstellelement 12 keine Falten in dem Abweisernetz 11.

Folglich können Positionierprozess bei der Montage des Glaselements sowie Herstellprozesse des Glaselements mit einer geringeren Genauigkeit und damit kostengünstiger ausgelegt werden. Eine zuverlässige Funktion des Windabweisers hinsichtlich einer Reduktion von Windgeräuschen bleibt bei dieser Ausführungsform gewährleistet.

Die Erfindung ist nicht auf den in den vorstehenden Figuren dargestellten, speziellen Aufbau des Windabweisers beschränkt.

### Bezugszeichenliste

- 1: Windabweiser
- 4: Dach
- 5: Fahrtrichtung
- 10: Anbindungselement
- 10a: Nut
- 11: Abweiserelement
- 11a, 11b: Randabschnitte
- 11c, 11d: Kederelemente
- 12: Ausstellelement
- 13: Dichtung
- 13a: Kammer
- 13b: Eingriffselement
- 41: Glaselement
- 41a: vorderer Randabschnitt
- 42: Dachöffnung
- 44: umlaufende Dichtung
- 43: Blechrahmen
- 45: Wölbung
- 46: Fahrgastinnenraum
- 47: Klebstoff

- AH: Ausstellhöhe
- WT: Wölbungstiefe

## Patentansprüche

1. Windabweiser (1) für eine mittels eines beweglichen Dachteils verschließbare und teilweise freigebbare Dachöffnung (42) eines Dachs (4) eines Fahrzeugs, das ein Element (41) aufweist, welches einen Dachrand der Dachöffnung (42) und/oder einen Teil des Dachs (4) bildet,
- mit einem Anbindungselement (10), welches an einem dem Fahrgastraum zugewandten Randabschnitt (41a) des Elements (41) befestigbar ist,
- mit einem Ausstellelement (12), welches zu dem Element (41) ausstellbar ist,
- mit einem aufspannbaren Abweiserelement (11), welches an seinem einen Randabschnitt (11a) an dem Ausstellelement (12) und an seinem anderen Randabschnitt (11b) an dem Anbindungselement (10) befestigt ist,
**dadurch gekennzeichnet, dass** das Element ein Glaselement (41) ist, und dass das Anbindungselement eine Dichtung (13), insbesindere eine Hohlprofildichtung, aufweist, an welcher ein vorderer Rand des beweglichen Dachteils bei verschlossener Dachöffnung (42) abdichtend anlegbar ist.

2. Windabweiser nach Anspruch 1,
**dadurch gekennzeichnet,**
**dass** das Anbindungselement (10) als Umschäumung ausgebildet ist.

3. Windabweiser nach Anspruch 2,
**dadurch gekennzeichnet,**
**dass** die Umschäumung Polyurethan aufweist.

4. Windabweiser nach wenigstens einem der vorstehenden Ansprüche,
**dadurch gekennzeichnet,**
**dass** die Befestigung des Abweiserelements (11) an dem Anbindungselement (10) und/oder die Befestigung des Abweiserelements (11) an dem Ausstellelement (12) durch Kederelemente, Klebstoff, Umspritzung des Abweiserelements (11), Schweißnaht und/oder Umschlingung vorgesehen ist.

5. Windabweiser nach wenigstens einem der vorstehenden Ansprüche,
**dadurch gekennzeichnet,**
**dass** das Abweiserelement (11) als Folie und/oder Netz ausgebildet ist.

## Claims

1. Wind deflector (1) for a roof opening (42) of a roof (4) of a vehicle, which roof opening can be closed and can be partially opened up by means of a moveable roof part, which roof has an element (41) which forms a roof edge of the roof opening (42) and/or part of the roof (4),
- with a connecting element (10) which can be fastened to an edge section (41a) of the element (41), said edge section facing the passenger compartment,
- with a deployment element (12) which can be deployed with respect to the element (41), and
- with a stretchable deflector element (11) which is fastened at its one edge section (11a) to the deployment element (12) and at its other edge section (11b) to the connecting element (10),
**characterized in that** the element is a glass element (41), and **in that** the connecting element has a seal (13), in particular a hollow profile seal, against which a front edge of the moveable roof part can bear in a sealing manner when the roof opening (42) is closed.

2. Wind deflector according to Claim 1, **characterized in that** the connecting element (10) is designed as a foam encapsulation.

3. Wind deflector according to Claim 2, **characterized in that** the foam encapsulation contains polyurethane.

4. Wind deflector according to at least one of the preceding claims, **characterized in that** the fastening of the deflector element (11) to the connecting element (10) and/or of the fastening of the deflector element (11) to the deployment element (12) is provided by means of weather strip elements, adhesive, encapsulation of the deflector element (11) by injection moulding, a weld seam and/or by wrapping it therearound.

5. Wind deflector according to at least one of the preceding claims, **characterized in that** the deflector element (11) is designed as a film and/or net.

## Revendications

1. Déflecteur d'air (1) pour une ouverture de toit (42) d'un toit (4) d'un véhicule, pouvant être fermée au moyen d'une partie de toit mobile et pouvant être ouverte en partie, lequel toit comprend un élément (41) qui forme un bord de toit de l'ouverture de toit (42) et/ou une partie du toit (4),
- avec un élément de liaison (10), qui peut être fixé à une partie de bord (41a) de l'élément (41) tournée vers l'habitacle,
- avec un élément relevable (12), qui peut être relevé par rapport à l'élément (41),
- avec un élément de déflexion (11) apte à être tendu, qui est fixé par sa première partie de bord (11a) à l'élément relevable (12) et par son autre partie de bord (11b) à l'élément de liaison (10),
**caractérisé en ce que** l'élément est un élément en verre (41), et **en ce que** l'élément de liaison présente un joint d'étanchéité (13), en particulier un joint d'étanchéité profilé creux, sur lequel un bord avant de la partie de toit mobile peut s'appliquer de façon étanche lorsque l'ouverture de toit (42) est fermée.

2. Déflecteur d'air selon la revendication 1, **caractérisé en ce que** l'élément de liaison (10) est réalisé sous la forme d'un enrobage de mousse.

3. Déflecteur d'air selon la revendication 2, **caractérisé en ce que** l'enrobage de mousse comprend du polyuréthane.

4. Déflecteur d'air selon au moins une des revendications précédentes, **caractérisé en ce que** la fixation de l'élément de déflexion (11) à l'élément de liaison (10) et/ou la fixation de l'élément de déflexion (11) à l'élément relevable (12) est prévue par des éléments de bourrelet, par une colle, par enrobage par projection de l'élément de déflexion (11), par un cordon de soudure et/ou par enroulement.

5. Déflecteur d'air selon au moins une des revendications précédentes, **caractérisé en ce que** l'élément de déflexion (11) se présente sous la forme d'une feuille et/ou d'un filet.
